# EUROPEAN PATENT APPLICATION

(11) **EP 4 716 193 A1**
(43) Date of publication of application: **25.03.2026**
(21) Application number: 24818724.7
(22) Date of filing: 06.06.2024
(51) Int. Cl.: H04L 67/51, G06F 9/50

(54) **MICROSERVICE MANAGEMENT METHOD BASED ON CLOUD MANAGEMENT PLATFORM, AND CLOUD MANAGEMENT PLATFORM**

(30) Priority: 06.06.2023 CN 202310664774; 28.09.2023 CN 202311287719
(71) Applicant: Huawei Cloud Computing Technologies Co., Ltd., Guiyang, Guizhou, 550025 (CN)
(72) Inventor: ZHU, Xuqi, Guiyang, Guizhou 550025 (CN); CUI, Duo, Guiyang, Guizhou 550025 (CN); YANG, Yongqiang, Guiyang, Guizhou 550025 (CN)
(74) Representative: Isarpatent
(86) International application number: PCT/CN2024/097729
(87) International publication number: WO 2024/251192

(57) **Abstract**

This application discloses a microservice management method based on a cloud management platform and a cloud management platform. The cloud management platform may correctly deploy a plurality of microservices at corresponding sites, to accurately meet cross-region deployment requirements of users for an application. The method in this application is implemented based on the cloud management platform. The cloud management platform is configured to manage an infrastructure that provides a cloud service, the infrastructure includes a plurality of sites at different geographical locations, and the method includes: obtaining, from a microservice configuration interface, microservice configuration information input by a tenant, where the microservice configuration information indicates a region group and a service level agreement SLA constraint for the region group, the region group includes a plurality of first microservices, and the SLA constraint includes a first SLA parameter that needs to be met by the plurality of first microservices; and selecting, from the plurality of sites based on the microservice configuration information, a first site that meets the first SLA parameter, creating a plurality of first virtual instances at the first site, and deploying the plurality of first microservices in the plurality of first virtual instances.

## Description

This application claims priorities to Chinese Patent Application No. 202310664774.3, filed with the China National Intellectual Property Administration on June 6, 2023 and entitled "MICROSERVICE DEPLOYMENT METHOD BASED ON CLOUD MANAGEMENT PLATFORM AND CLOUD MANAGEMENT PLATFORM", and to Chinese Patent Application No. 202311287719.3, filed with the China National Intellectual Property Administration on September 28, 2023 and entitled "MICROSERVICE MANAGEMENT METHOD BASED ON CLOUD MANAGEMENT PLATFORM AND CLOUD MANAGEMENT PLATFORM", both of which are incorporated herein by reference in their entireties.

### TECHNICAL FIELD

Embodiments of this application relate to the field of cloud technologies, and in particular, to a microservice management method based on a cloud management platform and a cloud management platform.

### BACKGROUND

A cloud-native application is a scalable application that can be built and run in dynamic environments of a cloud service system (for example, a public cloud, a private cloud, and a hybrid cloud). In consideration of various factors such as globalization, data security, and resource utilization, tenants (enterprises, individuals, or the like) increasingly expect a cloud service system provided by a cloud vendor to possess a cross-region deployment capability for the cloud-native application.

In the related technology, a cloud service system includes a cloud management platform and a plurality of sites at different geographical locations. After receiving a deployment request from a tenant for a specific application, the cloud management platform may determine, based on the request, all microservices included in the application. Then, the cloud management platform may deploy the microservices at different sites based on invoking relationships between the microservices and performance of the microservices. In this way, the cloud management platform completes cross-region deployment for the application.

In the foregoing process, because the cloud management platform deploys the plurality of microservices based only on the invoking relationships between the microservices and the performance of the microservices, and the considerations are one-sided, the microservices cannot be deployed at correct sites. Consequently, cross-region deployment requirements of users for the application cannot be accurately met.

### SUMMARY

Embodiments of this application provide a microservice management method based on a cloud management platform and a cloud management platform. The cloud management platform may correctly deploy a plurality of microservices at corresponding sites based on a tenant indication, to accurately meet cross-region deployment requirements of users for an application.

According to a first aspect of embodiments of this application, a microservice management method based on a cloud management platform is provided. The cloud management platform is configured to manage an infrastructure that provides a cloud service, the infrastructure includes a plurality of sites at different geographical locations, and the method includes the following steps:

When a tenant needs to deploy an application, the cloud management platform may provide a microservice configuration interface for the tenant. In this way, the tenant may input microservice configuration information in the microservice configuration interface. The microservice configuration information indicates a region group and a service level agreement (service level agreement, SLA) constraint for the region group, the region group includes a plurality of first microservices of the application (which may also be referred to as a plurality of specific microservices of the application, for example, a service logic component and an intermediate component of the application), and the SLA constraint includes a first SLA parameter that needs to be met by the plurality of first microservices.

After receiving the microservice configuration information through the microservice configuration interface, the cloud management platform may obtain the region group and the SLA constraint based on the microservice configuration information. The cloud management platform may determine, based on the plurality of first microservices included in the region group, that the plurality of first microservices need to be deployed at a same site, and use, as a site selection criterion, the first SLA parameter that needs to be met by the plurality of first microservices and that are included in the SLA constraint. In this way, the cloud management platform may select, from the plurality of sites, a site that meets the first SLA parameter as a first site, create a plurality of first virtual instances at the first site, and deploy the plurality of first microservices in the plurality of first virtual instances.

It can be learned from the foregoing method that, when the tenant needs to deploy the microservice of the application, the tenant may input the microservice configuration information to the microservice configuration interface provided by the cloud management platform. The microservice configuration information indicates the region group and the SLA constraint for the region group, the region group includes the plurality of first microservices, and the SLA constraint includes the first SLA parameter that needs to be met by the plurality of first microservices. After receiving the microservice configuration information, the cloud management platform may select, from the plurality of sites based on the microservice configuration information, the first site that meets the first SLA parameter, next create the plurality of first virtual instances at the first site, and then deploy the plurality of first microservices in the plurality of first virtual instances. In the foregoing process, because the region group indicates that the tenant needs to deploy the plurality of first microservices at the same site, and the SLA constraint indicates a resource requirement of the tenant on the site at which the plurality of first microservices are located, it can be learned that the cloud management platform selects, strictly based on a tenant indication, the first site for deploying the plurality of first microservices. Therefore, the cloud management platform may correctly deploy the plurality of first microservices at the first site, to accurately meet cross-region deployment requirements of users for the application.

In a possible implementation, the configuration information further indicates a microservice topology, the microservice topology includes the plurality of first microservices and a second microservice, the SLA constraint further includes a second SLA parameter that needs to be jointly met by the plurality of first microservices and the second microservice, and the method further includes: if a site combination including the first site and a second site meets the second SLA parameter, creating a second virtual instance at the second site, and deploying the second microservice in the second virtual instance, where the plurality of sites include the second site; or if only the first site meets the second SLA parameter, creating the second virtual instance at the first site, and deploying the second microservice in the second virtual instance. In the foregoing implementation, the microservice configuration information not only indicates the region group and the SLA constraint for the region group, but also indicates the microservice topology. The microservice topology includes the plurality of first microservices and the second microservice (namely, a common microservice of the application). The microservice topology indicates that the tenant indication may allow the second microservice and the plurality of first microservices to be deployed at the first site. Correspondingly, the SLA constraint not only includes the first SLA parameter that needs to be met by the plurality of first microservices, but also includes the second SLA parameter that needs to be jointly met by the plurality of first microservices and the second microservice. In this case, after deploying the plurality of first microservices at the first site, in consideration of effective utilization of site resources, the cloud management platform may first detect whether the site combination that meets the second SLA parameter exists. If the site combination that meets the second SLA parameter exists, it indicates that the site combination including the first site and the second site meets the second SLA parameter, and in this case, the cloud management platform creates the second virtual instance at the second site, and deploys the second microservice in the second virtual instance. If the site combination that meets the second SLA parameter does not exist, and only the first site can meet the second SLA parameter, the cloud management platform creates the second virtual instance at the first site, and deploys the second microservice in the second virtual instance.

In a possible implementation, the configuration information further indicates a site range specified by the tenant, the site range includes at least one site in the plurality of sites, and selecting, from the plurality of sites based on the microservice configuration information, the first site that meets the first SLA parameter includes: selecting, from the at least one site based on the microservice configuration information, the first site that meets the first SLA parameter. In the foregoing implementation, the microservice configuration information not only indicates the region group and the SLA constraint for the region group, but also indicates the site range. The site range includes the at least one site in the plurality of sites, and the at least one site is a site specified by the tenant. In this case, the cloud management platform may obtain the region group, the SLA constraint for the region group, and the site range based on the microservice configuration information. The cloud management platform may determine, based on the plurality of first microservices included in the region group, that the plurality of first microservices need to be deployed at the same site, use, as the site selection criterion, the first SLA parameter that needs to be met by the plurality of first microservices and that are included in the SLA constraint, and select, from the site range, the site that the plurality of first microservices are deployed at. In this way, the cloud management platform may select, from the at least one site included in the site range, the site that meets the first SLA parameter as the first site, create the plurality of first virtual instances on a physical server at the first site, and deploy the plurality of first microservices in the plurality of first virtual instances.

In a possible implementation, the region group further includes a third microservice, the plurality of first microservices are microservices defined by the tenant, the third microservice is a microservice provided by the cloud management platform for the tenant, and selecting, from the plurality of sites based on the microservice configuration information, the first site that meets the first SLA parameter includes: determining, from the plurality of sites based on the microservice configuration information, a site that can provide the third microservice, and selecting, from the site that can provide the third microservice, the site that meets the first SLA parameter as the first site. In the foregoing implementation, the region group indicated by the microservice configuration information not only includes the plurality of first microservices, but also includes the third microservice (namely, a cloud microservice). In this case, the cloud management platform may obtain the region group and the SLA constraint for the region group based on the microservice configuration information. The cloud management platform may determine, based on the plurality of first microservices and the third microservice that are included in the region group, that the plurality of first microservices and the third microservice need to be deployed at a same site, and use, as a site selection criterion, the first SLA parameter that needs to be met by the plurality of first microservices and that are included in the SLA constraint. Because the third microservice is the microservice provided by the cloud management platform for the tenant, the cloud management platform may select, from the plurality of sites, the site that can provide the third microservice, select, from the site that can provide the third microservice, the site that meets the first SLA parameter as the first site, create the plurality of first virtual instances on the physical server at the first site, and deploy the plurality of first microservices in the plurality of first virtual instances.

In a possible implementation, the plurality of first microservices are microservices defined by the tenant, and selecting, from the plurality of sites based on the microservice configuration information, the first site that meets the first SLA parameter includes: determining, based on the microservice configuration information and from a preset microservice relationship template originating from the tenant, a third microservice associated with the plurality of first microservices, where the third microservice is a microservice provided by the cloud management platform for the tenant; and determining, from the plurality of sites, a site that can provide the third microservice, and selecting, from the site that can provide the third microservice, the site that meets the first SLA parameter as the first site. In the foregoing implementation, the tenant may preset a microservice relationship template of the application on the cloud management platform in advance. In this case, the cloud management platform may obtain the region group and the SLA constraint for the region group based on the microservice configuration information, and determine, from the microservice relationship template, the third microservice associated with the plurality of first microservices in the region group. Therefore, the cloud management platform may determine that the plurality of first microservices and the third microservice need to be deployed at the same site, and use, as the site selection criterion, the first SLA parameter that needs to be met by the plurality of first microservices and that are included in the SLA constraint. Because the third microservice is the microservice provided by the cloud management platform for the tenant, the cloud management platform may select, from the plurality of sites, the site that can provide the third microservice, select, from the site that can provide the third microservice, the site that meets the first SLA parameter as the first site, create the plurality of first virtual instances on the physical server at the first site, and deploy the plurality of first microservices in the plurality of first virtual instances.

In a possible implementation, the method further includes: creating a third virtual instance at the first site, and deploying the third microservice in the third virtual instance. In the foregoing implementation, after deploying the plurality of first microservices at the first site, the cloud management platform may further deploy the third microservice at the first site.

In a possible implementation, the first virtual instance includes at least one of the following: virtual machine or container.

In a possible implementation, the plurality of sites are a plurality of availability zones, a plurality of regions, or at least one edge site and at least one central site.

In a possible implementation, the first SLA parameter includes at least one of the following: communication latency, throughput, and processing time.

According to a second aspect of embodiments of this application, a cloud management platform is provided. The cloud management platform is configured to manage an infrastructure that provides a cloud service, the infrastructure includes a plurality of sites at different geographical locations, and the cloud management platform includes: an obtaining module, configured to obtain, from a microservice configuration interface, microservice configuration information input by a tenant, where the microservice configuration information indicates a region group and a service level agreement SLA constraint for the region group, the region group includes a plurality of first microservices, and the SLA constraint includes a first SLA parameter that needs to be met by the plurality of first microservices; and a first deployment module, configured to: select, from the plurality of sites based on the microservice configuration information, a first site that meets the first SLA parameter, create a plurality of first virtual instances at the first site, and deploy the plurality of first microservices in the plurality of first virtual instances.

It can be learned from the foregoing cloud management platform that, when the tenant needs to deploy a microservice of an application, the tenant may input the microservice configuration information to the microservice configuration interface provided by the cloud management platform. The microservice configuration information indicates the region group and the SLA constraint for the region group, the region group includes the plurality of first microservices, and the SLA constraint includes the first SLA parameter that needs to be met by the plurality of first microservices. After receiving the microservice configuration information, the cloud management platform may select, from the plurality of sites based on the microservice configuration information, the first site that meets the first SLA parameter, next create the plurality of first virtual instances at the first site, and then deploy the plurality of first microservices in the plurality of first virtual instances. In the foregoing process, because the region group indicates that the tenant needs to deploy the plurality of first microservices at a same site, and the SLA constraint indicates a resource requirement of the tenant on the site at which the plurality of first microservices are located, it can be learned that the cloud management platform selects, strictly based on a tenant indication, the first site for deploying the plurality of first microservices. Therefore, the cloud management platform may correctly deploy the plurality of first microservices at the first site, to accurately meet cross-region deployment requirements of users for the application.

In a possible implementation, the configuration information further indicates a microservice topology, the microservice topology includes the plurality of first microservices and a second microservice, the SLA constraint further includes a second SLA parameter that needs to be jointly met by the plurality of first microservices and the second microservice, and the cloud management platform further includes a second deployment module, configured to: if a site combination including the first site and a second site meets the second SLA parameter, create a second virtual instance at the second site, and deploy the second microservice in the second virtual instance, where the plurality of sites include the second site; or if only the first site meets the second SLA parameter, create the second virtual instance at the first site, and deploy the second microservice in the second virtual instance.

In a possible implementation, the configuration information further indicates a site range specified by the tenant, the site range includes at least one site in the plurality of sites, and the first deployment module is configured to select, from the at least one site based on the microservice configuration information, the first site that meets the first SLA parameter.

In a possible implementation, the region group further includes a third microservice, the plurality of first microservices are microservices defined by the tenant, the third microservice is a microservice provided by the cloud management platform for the tenant, and the first deployment module is configured to: determine, from the plurality of sites based on the microservice configuration information, a site that can provide the third microservice, and select, from the site that can provide the third microservice, a site that meets the first SLA parameter as the first site.

In a possible implementation, the plurality of first microservices are microservices defined by the tenant, and the first deployment module is configured to: determine, based on the microservice configuration information and from a preset microservice relationship template originating from the tenant, a third microservice associated with the plurality of first microservices, where the third microservice is a microservice provided by the cloud management platform for the tenant; and determine, from the plurality of sites, a site that can provide the third microservice, and select, from the site that can provide the third microservice, a site that meets the first SLA parameter as the first site.

In a possible implementation, the cloud management platform further includes a third deployment module, configured to: create a third virtual instance at the first site, and deploy the third microservice in the third virtual instance.

In a possible implementation, the first virtual instance includes at least one of the following: virtual machine or container.

In a possible implementation, the plurality of sites are a plurality of availability zones, a plurality of regions, or at least one edge site and at least one central site.

In a possible implementation, the first SLA parameter includes at least one of the following: communication latency, throughput, and processing time.

According to a third aspect of embodiments of this application, a computing device cluster is provided. The computing device cluster includes at least one computing device, each computing device includes a processor and a memory, the memory is configured to store instructions, and the processor is configured to cause, according to the instructions, the computing device cluster to perform the method according to the first aspect or any one of the possible implementations of the first aspect.

According to a fourth aspect of embodiments of this application, a computer storage medium is provided. The computer storage medium stores one or more instructions. When the instructions are executed by one or more computers, the one or more computers are caused to implement the method according to the first aspect or any one of the possible implementations of the first aspect.

According to a fifth aspect of embodiments of this application, a computer program product is provided. The computer program product stores instructions. When the instructions are executed by a computer, the computer is caused to implement the method according to the first aspect or any one of the possible implementations of the first aspect.

In embodiments of this application, when the tenant needs to deploy the microservice of the application, the tenant may input the microservice configuration information to the microservice configuration interface provided by the cloud management platform. The microservice configuration information indicates the region group and the SLA constraint for the region group, the region group includes the plurality of first microservices, and the SLA constraint includes the first SLA parameter that needs to be met by the plurality of first microservices. After receiving the microservice configuration information, the cloud management platform may select, from the plurality of sites based on the microservice configuration information, the first site that meets the first SLA parameter, next create the plurality of first virtual instances at the first site, and then deploy the plurality of first microservices in the plurality of first virtual instances. In the foregoing process, because the region group indicates that the tenant needs to deploy the plurality of first microservices at the same site, and the SLA constraint indicates the resource requirement of the tenant on the site at which the plurality of first microservices are located, it can be learned that the cloud management platform selects, strictly based on the tenant indication, the first site for deploying the plurality of first microservices. Therefore, the cloud management platform may correctly deploy the plurality of first microservices at the first site, to accurately meet the cross-region deployment requirement of the user for the application.

### BRIEF DESCRIPTION OF DRAWINGS

FIG. 1 is a diagram of a structure of a cloud service system according to an embodiment of this application;
FIG. 2 is a schematic flowchart of a microservice management method based on a cloud management platform according to an embodiment of this application;
FIG. 3 is a diagram of a microservice relationship template according to an embodiment of this application;
FIG. 4 is a diagram of microservice configuration information according to an embodiment of this application;
FIG. 5 is another schematic flowchart of a microservice management method based on a cloud management platform according to an embodiment of this application;
FIG. 6 is another diagram of microservice configuration information according to an embodiment of this application;
FIG. 7 is another schematic flowchart of a microservice management method based on a cloud management platform according to an embodiment of this application;
FIG. 8 is another diagram of microservice configuration information according to an embodiment of this application;
FIG. 9 is another schematic flowchart of a microservice management method based on a cloud management platform according to an embodiment of this application;
FIG. 10 is another diagram of a microservice relationship template according to an embodiment of this application;
FIG. 11 is another diagram of microservice configuration information according to an embodiment of this application;
FIG. 12 is another schematic flowchart of a microservice management method based on a cloud management platform according to an embodiment of this application;
FIG. 13 is another diagram of microservice configuration information according to an embodiment of this application;
FIG. 14 is a diagram of a structure of a cloud management platform according to an embodiment of this application;
FIG. 15 is a diagram of a structure of a computing device according to an embodiment of this application;
FIG. 16 is a diagram of a structure of a computing device cluster according to an embodiment of this application; and
FIG. 17 is a diagram in which computer devices in a computer cluster are connected via a network according to an embodiment of this application.

### DESCRIPTION OF EMBODIMENTS

Embodiments of this application provide a microservice management method based on a cloud management platform and a cloud management platform. The cloud management platform may correctly deploy a plurality of microservices at corresponding sites based on a tenant indication, to accurately meet cross-region deployment requirements of users for an application.

In the specification, the claims, and the accompanying drawings of this application, terms such as "first" and "second" are used for distinguishing between similar objects, but are not necessarily used for describing a specific order or sequence. It should be understood that, the terms used in such a way are interchangeable in appropriate circumstances, and this is merely a distinguishing manner used when objects with a same attribute are described in embodiments of this application. In addition, terms "include", "have", and any other variations thereof are intended to cover a non-exclusive inclusion, so that a process, a method, a system, a product, or a device that includes a series of units is not necessarily limited to those units, but may include other units not expressly listed or inherent to such a process, method, product, or device.

A cloud-native application is a scalable application that can be built and run in dynamic environments of a cloud service system (for example, a public cloud, a private cloud, and a hybrid cloud). In consideration of various factors such as globalization, data security, and resource utilization, tenants (enterprises, individuals, or the like) increasingly expect a cloud service system provided by a cloud vendor to possess a cross-region deployment capability for the cloud-native application.

In the related technology, the cloud service system includes a cloud management platform and a plurality of sites at different geographical locations. After receiving a deployment request from a tenant for a specific application, the cloud management platform may determine, based on the request, all microservices included in the application. Then, the cloud management platform may deploy the microservices at different sites based on invoking relationships between the microservices and performance of the microservices. In this way, the cloud management platform completes cross-region deployment for the application. For example, it is assumed that the application of the tenant includes a microservice A, a microservice B, a microservice C, a microservice D, and a microservice E. Based on invoking relationships between the five microservices and performance of the five microservices (for example, frequent communication between the microservice A and the microservice B, frequent communication between the microservice C and the microservice D, and less communication between the microservice B and the microservice C), the cloud management platform may deploy the microservice A and the microservice B at a site 1, and deploy the microservice C and the microservice D at a site B.

In the foregoing process, because the cloud management platform deploys the plurality of microservices based only on factors such as the invoking relationships between the microservices and the performance of the microservices, and the considered factors are one-sided, the microservices cannot be deployed at correct sites. Consequently, cross-region deployment requirements of the users for the application cannot be accurately met.

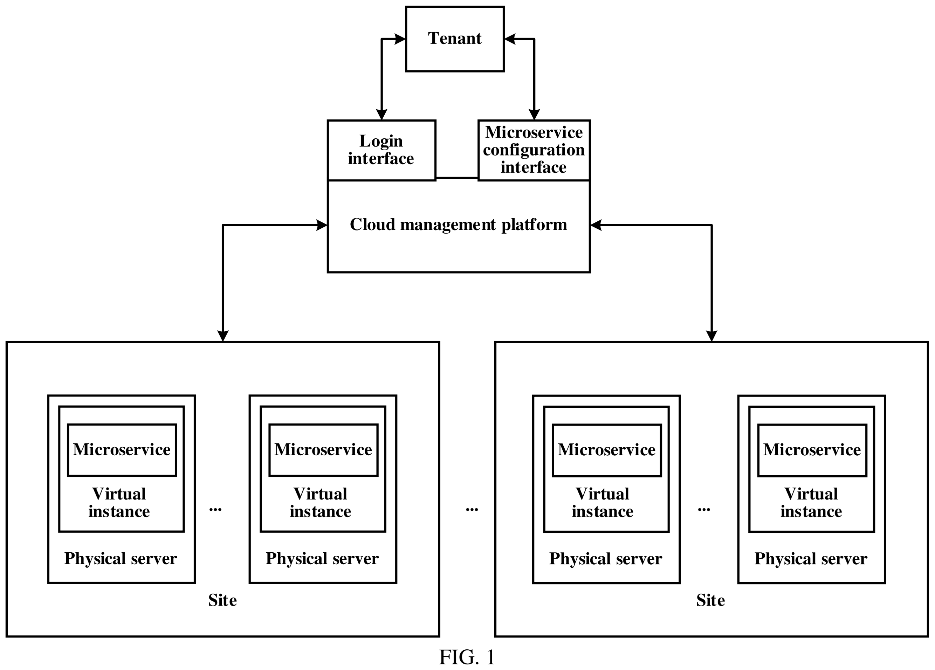

To resolve the foregoing problem, embodiments of this application provide a microservice management method based on a cloud management platform. The method may be implemented based on the cloud management platform in a cloud service system. FIG. 1 is a diagram of a structure of a cloud service system according to an embodiment of this application. As shown in FIG. 1, the cloud service system includes an infrastructure that can provide a cloud service and a cloud management platform that manages the infrastructure. The following separately describes the cloud management platform and the infrastructure.

The cloud management platform may perform coordinated management on virtual instances at a plurality of sites in the entire cloud service system (for example, select a physical server at the site, create a virtual instance on the physical server, and deploy a microservice in the virtual instance), and may also be open to tenants outside the system and respond to requests of the tenants outside the system. For example, the cloud management platform may provide various interfaces such as a login interface and a microservice configuration interface for access of a client of the tenant (for example, a terminal device used by the tenant or a browser on the terminal device). The cloud management platform may perform identity authentication on the client of the tenants through the login interface. After the identity authentication succeeds, the client of the tenant may be allowed to log in to the cloud management platform. The cloud management platform may further allow, through the microservice configuration interface, the client of the tenant to send microservice configuration information to the cloud management platform. Based on the configuration information, the cloud management platform may select a site for a plurality of microservices of an application that is specified by the tenant, and create, on a physical server at the site, a plurality of virtual instances for deploying the plurality of microservices. In this case, the virtual instances may process services of a user by running corresponding microservices, to meet a service processing requirement of the user.

The infrastructure includes a plurality of sites (sites) that are at different geographical locations and that can be selected by the cloud management platform. Each of the sites includes a specific quantity of physical servers and various devices such as a network, storage, and power supply device. Based on an indication of the client of the tenant, the cloud management platform may select a specific site for the tenant from the plurality of sites, and select at least one physical server at the site, to create a plurality of dedicated virtual instances (which may also be referred to as cloud instances) on the physical server for the tenant, and deploy, in the plurality of virtual instances, microservices specified by the tenant. The plurality of sites in the infrastructure may be presented in a plurality of forms. For example, the plurality of sites may be a plurality of regions (region) in the infrastructure. For another example, the plurality of sites may be a plurality of availability zones (availability zone) in the infrastructure. For still another example, the plurality of sites may be at least one edge site and at least one central cloud site in the infrastructure, or the like.

Further, the virtual instance may also be presented in a plurality of forms. For example, the virtual instance may be a virtual machine (virtual machine, VM) on the physical server. For another example, the virtual instance may be a container (docker) on the physical server. For still another example, the virtual instance may alternatively be a container in the VM on the physical server or the like. It should be noted that, communication may be implemented inside the cloud service system, in other words, the plurality of virtual instances dedicated to the tenant may communicate with each other. Because the plurality of microservices specified by the tenant are deployed in the virtual instances, that the plurality of virtual instances dedicated to the tenant communicate with each other may also be understood as that the plurality of microservices specified by the tenant communicate with each other (which may also be referred to as mutual invoking).

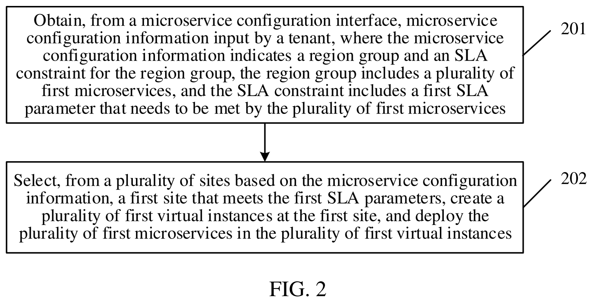

Because the cloud management platform may accurately deploy, based on a tenant indication, the plurality of microservices of the application that is specified by the user at a same site, this helps the cloud management platform more accurately complete cross-region deployment requirements of tenants for the application. For further understanding of a working procedure of the cloud management platform, the following separately describes the procedure by using a plurality of embodiments. FIG. 2 is a schematic flowchart of a microservice management method based on a cloud management platform according to an embodiment of this application. As shown in FIG. 2, a first embodiment of the method includes the following steps.

201: Obtain, from a microservice configuration interface, microservice configuration information input by a tenant, where the microservice configuration information indicates a region group and an SLA constraint for the region group, the region group includes a plurality of first microservices, and the SLA constraint includes a first SLA parameter that needs to be met by the plurality of first microservices.

In this embodiment, when the tenant needs to deploy a specific application, the tenant may obtain a microservice relationship template of the application (which may also be referred to as a directed acyclic graph of a microservice). The microservice relationship template of the application includes all microservices forming the application (which may also be referred to as all components of the application, and it is assumed that all the microservices of the application are microservices defined by the tenant) and invoking relationships between the microservices. The invoking relationships between the microservices may be presented by using a plurality of unidirectional paths, each of the unidirectional paths represents one service of the application, and each of the unidirectional paths includes at least two microservices.

In the plurality of unidirectional paths included in the microservice relationship template of the application, the tenant may select a specific unidirectional path from the plurality of unidirectional paths as a key path (key path) based on a service requirement of the tenant. The key path may include the plurality of first microservices (which may also be referred to as a plurality of specific microservices, for example, a service logic component and an intermediate component in the key path) and at least one second microservice (which may also be referred to as a common microservice, for example, an entry component in the key path).

After determining the key path, the tenant may log in to the cloud management platform by using a client used by the tenant, and the cloud management platform may provide the microservice configuration interface (for example, a configuration input box on a microservice management interface) for the client used by the tenant. In this way, the tenant may send the microservice configuration information to the microservice configuration interface by using the client, to cause the cloud management platform to receive, through the microservice configuration interface, the microservice configuration information sent by the client of the tenant. The microservice configuration information indicates the region group (region group) set by the tenant and the SLA constraint that is for the region group and that is set by the tenant, the region group set by the tenant includes the plurality of first microservices in the key path, and the SLA constraint includes the first SLA parameter that needs to be met by the plurality of first microservices. It should be noted that, the region group set by the tenant indicates that the tenant needs to deploy the plurality of first microservices at a same site, and the SLA constraint set by the tenant indicates a resource requirement of the tenant on the site at which the plurality of first microservices are located.

Specifically, the first SLA parameter may include at least one of the following: communication latency that needs to be met by the plurality of first microservices, throughputs that need to be met by the plurality of first microservices, (data) processing time that needs to be met by the plurality of first microservices, and the like.

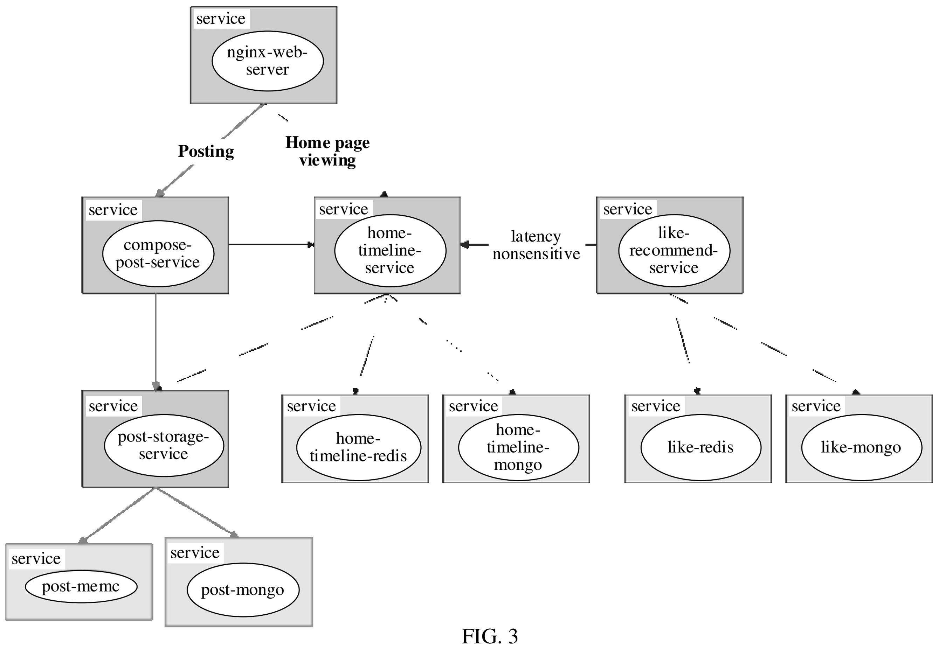

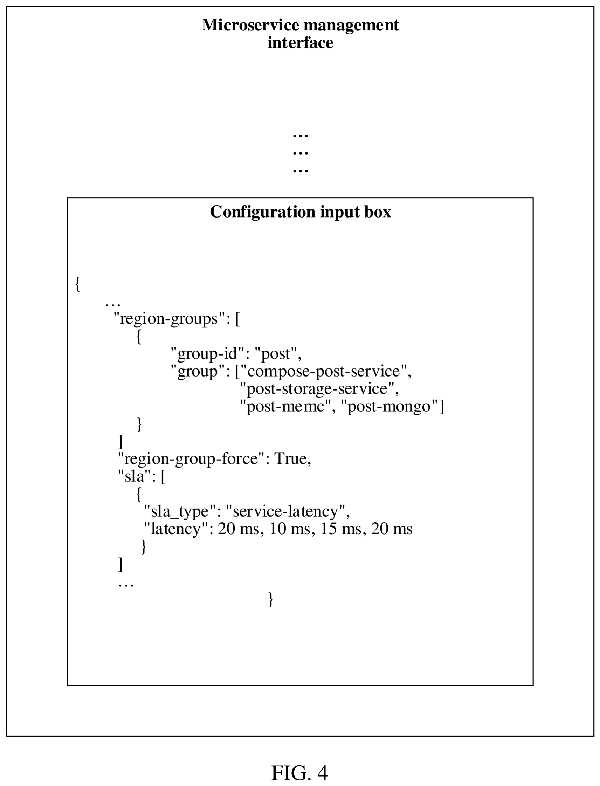

For example, as shown in FIG. 3 and FIG. 4 (where FIG. 3 is a diagram of a microservice relationship template according to an embodiment of this application, and FIG. 4 is a diagram of microservice configuration information according to an embodiment of this application), it is assumed that the tenant has a web application. In this case, a microservice relationship template of the application describes all microservices (service) of the application and invoking relationships between the microservices. The invoking relationships are presented as a plurality of unidirectional paths, including a unidirectional path representing a posting service, a unidirectional path representing a home page viewing service, and the like. The tenant may consider the unidirectional path representing the posting service as a key path based on a service understanding. It can be learned from FIG. 3 that, the key path includes five microservices: "nginx-web-server", "compose-post-service", "post-storage-service", "post-memc", and "post-mongo". "nginx-web-server" is an entry component, namely, a common microservice. "compose-post-service" and "post-storage-service" are service logic components. "post-memc" and "post-mongo" are intermediate components. The four microservices are specific microservices.

In this case, the tenant may log in to the cloud management platform by using a browser of the tenant, and the cloud management platform may display a microservice management interface on the browser of the tenant. The microservice management interface includes a configuration input box for the microservices, and the tenant may input microservice configuration information in the configuration input box. It can be learned from FIG. 4 that, the microservice configuration information includes the following content.
(1) The tenant sets a region group, and an ID of the region group is "post". The region group includes the four specific microservices: "compose-post-service", "post-storage-service", "post-memc", and "post-mongo", and an attribute of the region group (region-group-force) is set to strong binding (true), indicating that the four specific microservices need to be set at a same site.
(2) The tenant further sets an SLA constraint for the region group. The SLA constraint includes communication latency of the four specific microservices (service-latency): 20 ms, 10 ms, 15 ms, and 20 ms. It is clear that the SLA constraint may further include SLA parameters such as throughputs and data processing time of the four specific microservices. This is not displayed one by one herein.

In this way, the cloud management platform may receive, by using the configuration input box, the microservice configuration information input by the tenant.

It should be understood that, in this embodiment, that the content indicated by the microservice configuration information includes the region group and the SLA constraint for the region group is merely used as an example for description. During actual application, the microservice configuration information may further include personal information of the tenant (including an ID of the tenant and the like), information about an application that the tenant needs to deploy (including images of a plurality of first microservices and a second microservice of the application and the like), a price constraint for the region group (indicating a price requirement of the tenant for a site at which the plurality of first microservices and the second microservice are located), a capacity constraint for the region group (indicating a communication resource requirement, a computing resource requirement, and a storage resource requirement of the tenant for the site at which the plurality of first microservices and the second microservice are located), and the like.

202: Select, from a plurality of sites based on the microservice configuration information, a first site that meets the first SLA parameter, create a plurality of first virtual instances at the first site, and deploy the plurality of first microservices in the plurality of first virtual instances.

After obtaining the microservice configuration information, the cloud management platform may parse the microservice configuration information to obtain the region group and the SLA constraint for the region group. The cloud management platform may determine, based on the plurality of first microservices included in the region group, that the plurality of first microservices need to be deployed at the same site, and the cloud management platform may use, as a site selection criterion, the first SLA parameter that needs to be met by the plurality of first microservices and that are included in the SLA constraint. In this way, the cloud management platform may select, from the plurality of sites, a site that meets the first SLA parameter as the first site, create the plurality of first virtual instances on a physical server at the first site, and deploy the plurality of first microservices in the plurality of first virtual instances (where generally, one first virtual instance may be for deploying one first microservice).

Still as shown in the foregoing example, after obtaining the microservice configuration information, the cloud management platform may select, from a plurality of sites, a site 1 that can meet the SLA parameters such as 20 ms, 10 ms, 15 ms, and 20 ms, and create a container 1, a container 2, a container 3, and a container 4 at the site 1. The container 1 is for deploying "compose-post-service", the container 2 is for deploying "post-storage-service", the container 3 is for deploying "post-memc", and the container 4 is for deploying "post-mongo". In this way, the cloud management platform deploys the four specific microservices at a same site, namely, the site 1.

It should be understood that, in this embodiment, the first site selected by the cloud management platform not only meets the first SLA parameter in the SLA constraint, but also usually meets the foregoing price constraint, capacity constraint, and the like. Details are not described herein.

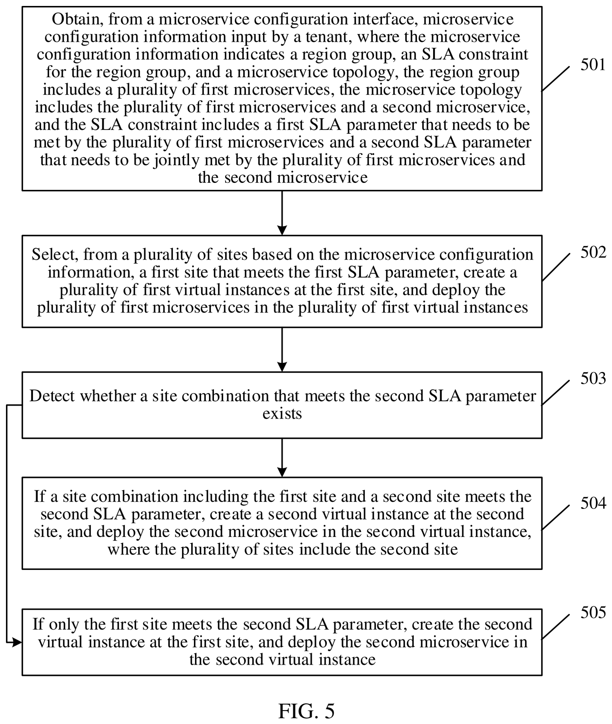

The foregoing describes in detail the first embodiment of the microservice management method based on the cloud management platform provided in embodiments of this application. The following describes a second embodiment of the method. FIG. 5 is another schematic flowchart of a microservice management method based on a cloud management platform according to an embodiment of this application. As shown in FIG. 5, the second embodiment of the method includes the following steps.

501: Obtain, from a microservice configuration interface, microservice configuration information input by a tenant, where the microservice configuration information indicates a region group, an SLA constraint for the region group, and a microservice topology, the region group includes a plurality of first microservices, the microservice topology includes the plurality of first microservices and a second microservice, and the SLA constraint includes a first SLA parameter that needs to be met by the plurality of first microservices and a second SLA parameter that needs to be jointly met by the plurality of first microservices and the second microservice.

For descriptions of step 501, refer to a related description part of step 201 in the embodiment shown in FIG. 2. Details are not described herein again. It should be noted that, a difference between step 501 and step 201 is as follows. The microservice configuration information not only indicates the region group set by the tenant and the SLA constraint that is for the region group and that is set by the tenant, but also indicates the microservice topology set by the tenant.

The region group set by the tenant includes the plurality of first microservices in a key path, the microservice topology includes the plurality of first microservices and a second microservice (that is, the key path), and the SLA constraint includes the first SLA parameter that needs to be met by the plurality of first microservices and the second SLA parameter that needs to be jointly met by the plurality of first microservices and the second microservice. It should be noted that, the region group set by the tenant indicates that the tenant needs to deploy the plurality of first microservices at a same site, the SLA constraint set by the tenant indicates a resource requirement of the tenant on a site at which the plurality of first microservices are located, and the microservice topology set by the tenant indicates a tenant indication of allowing the second microservice and the plurality of first microservices to be deployed at a same site.

Specifically, the second SLA parameter may include at least one of the following: communication latency that needs to be jointly met by the plurality of first microservices and the second microservice (that is, communication latency that needs to be met by the key path), a throughput that needs to be jointly met by the plurality of first microservices and the second microservice, (data) processing time that needs to be jointly met by the plurality of first microservices and the second microservice, and the like.

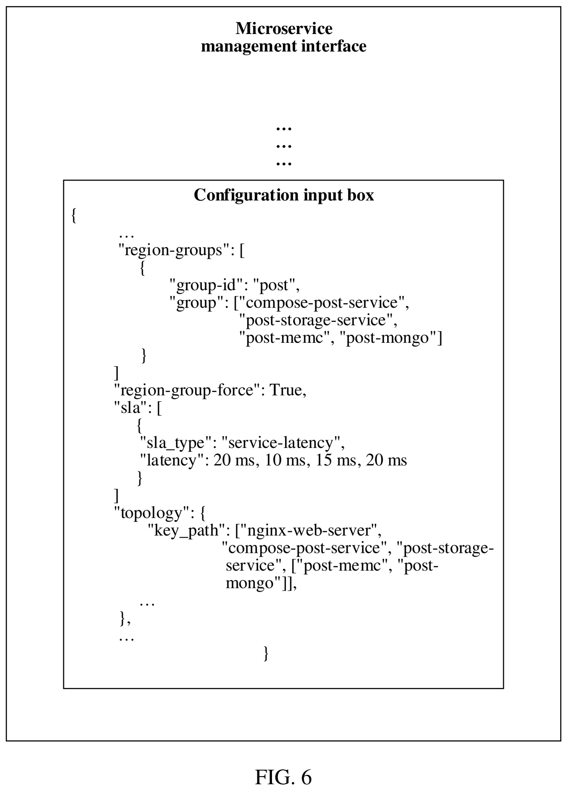

For example, as shown in FIG. 6 (where FIG. 6 is another diagram of microservice configuration information according to an embodiment of this application, and FIG. 6 is drawn based on FIG. 4), the tenant may log in to the cloud management platform by using a browser of the tenant, and the cloud management platform may display a microservice management interface on the browser of the tenant. The microservice management interface includes a configuration input box for a microservice, and the tenant may input microservice configuration information in the configuration input box. It can be learned from FIG. 6 that, the microservice configuration information includes the following content.
(1) The tenant sets a region group, and an ID of the region group is "post". The region group includes four specific microservices: "compose-post-service", "post-storage-service", "post-memc", and "post-mongo", and an attribute of the region group (region-group-force) is set to strong binding (true), indicating that the four specific microservices need to be set at a same site.
(2) The tenant further sets a microservice topology (topology). The microservice topology includes a key path. The key path includes a common microservice "nginx-web-server" and the four specific microservices: "compose-post-service", "post-storage-service", "post-memc", and "post-mongo".
(3) The tenant further sets an SLA constraint for the region group. The SLA constraint includes communication latency of the four specific microservices: 20 ms, 10 ms, 15 ms, and 20 ms. The SLA constraint further includes communication latency of the key path, namely, 100 ms. It is clear that the SLA constraint may further include throughputs and data processing time of the four specific microservices, a throughput and data processing time of the key path, and the like. This is not displayed one by one herein.

In this way, the cloud management platform may receive, by using the configuration input box, the microservice configuration information input by the tenant.

It should be understood that, in this embodiment, that the microservice topology includes the key path is merely used as an example for description. During actual application, the microservice topology may further include one or some paths other than the key path in a microservice relationship template. Therefore, the microservice topology indicates a tenant indication of allowing the second microservice, a microservice on a remaining path, and the plurality of first microservices to be deployed at a same site.

502: Select, from a plurality of sites based on the microservice configuration information, a first site that meets the first SLA parameter, create a plurality of first virtual instances at the first site, and deploy the plurality of first microservices in the plurality of first virtual instances.

For descriptions of step 502, refer to a related description part of step 202 in the embodiment shown in FIG. 2. Details are not described herein again.

503: Detect whether a site combination that meets the second SLA parameter exists.

504: If a site combination including the first site and a second site meets the second SLA parameter, create a second virtual instance at the second site, and deploy the second microservice in the second virtual instance, where the plurality of sites include the second site.

505: If only the first site meets the second SLA parameter, create the second virtual instance at the first site, and deploy the second microservice in the second virtual instance.

After deploying the plurality of first microservices at the first site, the cloud management platform may determine, based on the microservice topology, that the second microservice and the plurality of first microservices may be deployed at the first site. In consideration of effective utilization of site resources, the cloud management platform may first detect whether the site combination (including the first site) that meets the second SLA parameter exists. If the site combination that meets the second SLA parameter exists, it indicates that the site combination including the first site and the second site (which is a remaining site other than the first site in the plurality of sites) meets the second SLA parameter, and in this case, the cloud management platform creates the second virtual instance at the second site, and deploys the second microservice in the second virtual instance. If the site combination that meets the second SLA parameter does not exist, and only the first site can meet the second SLA parameter, the cloud management platform creates the second virtual instance at the first site, and deploys the second microservice in the second virtual instance.

Still as shown in the foregoing example, after obtaining the microservice configuration information, the cloud management platform may select a site 1 from a plurality of sites, and create a container 1, a container 2, a container 3, and a container 4 at the site 1. The container 1 is for deploying "compose-post-service", the container 2 is for deploying "post-storage-service", the container 3 is for deploying "post-memc", and the container 4 is for deploying "post-mongo".

Because the microservice topology includes the key path, and the communication latency of the key path is 100 ms, the cloud management platform may determine whether a site 2 that causes communication latency of a key path that is deployed at the site 2 and the site 1 to meet 100 ms exists. If the site 2 exists, it indicates that a site combination of the site 1 and the site 2 can meet a communication latency requirement of the tenant for the key path. Therefore, the cloud management platform may create a container 5 at the site 2, and the container 5 is for deploying "nginx-web-server". If the site 2 does not exist, it indicates that 100 ms is excessively long, and only the site 1 can meet a communication latency requirement of the tenant for the key path. Therefore, the cloud management platform may create a container 5 at the site 1, and the container 5 is for deploying "nginx-web-server".

It should be understood that, in this embodiment, the site combination of the first site and the second site and selected by the cloud management platform not only meets the second SLA parameter in the SLA constraint, but also usually meets the foregoing price constraint, capacity constraint, and the like. Details are not described herein.

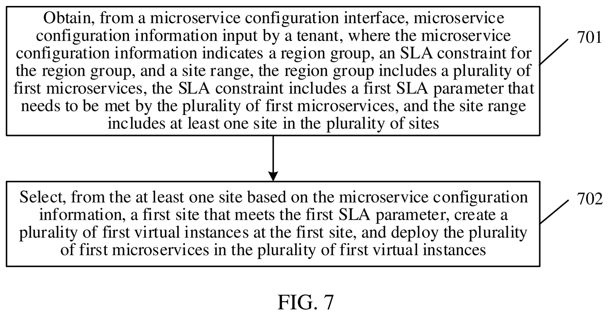

The foregoing describes in detail the second embodiment of the microservice management method based on the cloud management platform provided in embodiments of this application. The following describes a third embodiment of the method. FIG. 7 is another schematic flowchart of the microservice management method based on the cloud management platform according to an embodiment of this application. As shown in FIG. 7, the third embodiment of the method includes the following steps.

701: Obtain, from a microservice configuration interface, microservice configuration information input by a tenant, where the microservice configuration information indicates a region group, an SLA constraint for the region group, and a site range, the region group includes a plurality of first microservices, the SLA constraint includes a first SLA parameter that needs to be met by the plurality of first microservices, and the site range includes at least one site in the plurality of sites.

For descriptions of step 701, refer to a related description part of step 201 in the embodiment shown in FIG. 2. Details are not described herein again. It should be noted that, a difference between step 701 and step 201 is as follows. The microservice configuration information not only indicates the region group set by the tenant and the SLA constraint that is for the region group and that is set by the tenant, but also indicates a site range set by the tenant.

The site range set by the tenant includes the at least one site in the plurality of sites, and the at least one site is a private/specified site of the tenant.

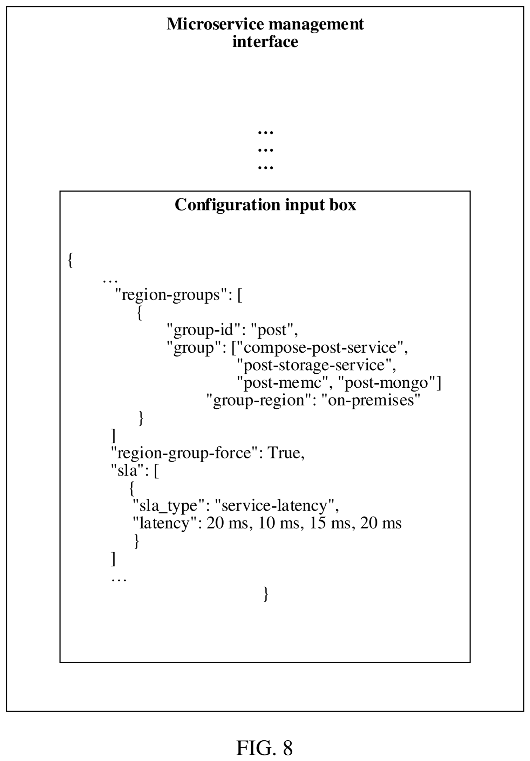

For example, as shown in FIG. 8 (where FIG. 8 is another diagram of microservice configuration information according to an embodiment of this application, and FIG. 8 is drawn based on FIG. 4), the tenant may log in to the cloud management platform by using a browser of the tenant, and the cloud management platform may display a microservice management interface on the browser of the tenant. The microservice management interface includes a configuration input box for a microservice, and the tenant may input microservice configuration information in the configuration input box. It can be learned from FIG. 8 that, the microservice configuration information includes the following content.
(1) The tenant sets a region group, and an ID of the region group is "post". The region group includes four specific microservices: "compose-post-service", "post-storage-service", "post-memc", and "post-mongo", and an attribute of the region group (region-group-force) is set to strong binding (true), indicating that the four specific microservices need to be set at a same site.
(2) The tenant further sets a site range (group-region). The tenant may set the site range to "on-promises", namely, a private or specified site of the tenant, based on a service requirement of the tenant. For example, the site range specified by the tenant is a site in the south China region of the cloud management platform. For another example, the site range specified by the tenant is a private site of the tenant in the plurality of sites managed by the cloud management platform.
(3) The tenant further sets an SLA constraint for the region group. The SLA constraint includes communication latency of the four specific microservices: 20 ms, 10 ms, 15 ms, and 20 ms. The SLA constraint further includes communication latency of a key path, namely, 100 ms. It is clear that the SLA constraint may further include throughputs and data processing time of the four specific microservices, a throughput and data processing time of the key path, and the like. This is not displayed one by one herein.

In this way, the cloud management platform may receive, by using the configuration input box, the microservice configuration information input by the tenant.

702: Select, from the at least one site based on the microservice configuration information, a first site that meets the first SLA parameter, create a plurality of first virtual instances at the first site, and deploy the plurality of first microservices in the plurality of first virtual instances.

After obtaining the microservice configuration information, the cloud management platform may parse the microservice configuration information to obtain the region group, the SLA constraint for the region group, and the site range. The cloud management platform may determine, based on the plurality of first microservices included in the region group, that the plurality of first microservices need to be deployed at a same site, and the cloud management platform may use, as a site selection criterion, the first SLA parameter that needs to be met by the plurality of first microservices and that are included in the SLA constraint. In addition, the cloud management platform may select, from the site range, the site that the plurality of first microservices are deployed at. In this way, the cloud management platform may select, from the at least one site included in the site range, the site that meets the first SLA parameter as the first site, create the plurality of first virtual instances on a physical server at the first site, and deploy the plurality of first microservices in the plurality of first virtual instances.

Still as shown in the foregoing example, after obtaining the microservice configuration information, because the site range specified by the tenant is the site in the south China region, the cloud management platform may select, from the site in the south China region, a site 1 that can meet SLA parameters such as 20 ms, 10 ms, 15 ms, and 20 ms, and create a container 1, a container 2, a container 3, and a container 4 at the site 1. The container 1 is for deploying "compose-post-service", the container 2 is for deploying "post-storage-service", the container 3 is for deploying "post-memc", and the container 4 is for deploying "post-mongo".

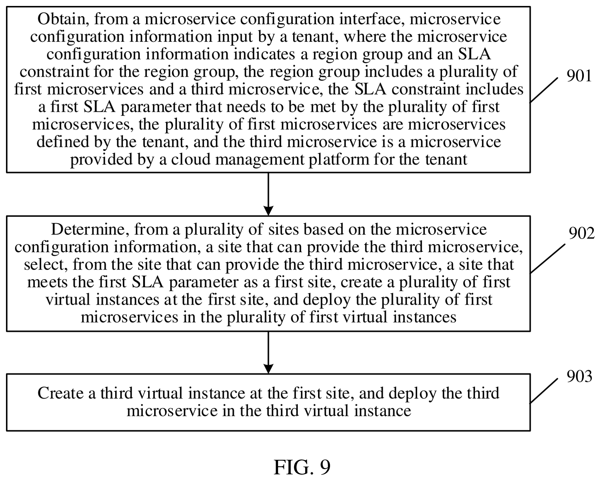

The foregoing describes in detail the third embodiment of the microservice management method based on the cloud management platform provided in embodiments of this application. The following describes a fourth embodiment of the method. FIG. 9 is another schematic flowchart of a microservice management method based on a cloud management platform according to an embodiment of this application. As shown in FIG. 9, the fourth embodiment of the method includes the following steps.

901: Obtain, from a microservice configuration interface, microservice configuration information input by a tenant, where the microservice configuration information indicates a region group and an SLA constraint for the region group, the region group includes a plurality of first microservices and a third microservice, the SLA constraint includes a first SLA parameter that needs to be met by the plurality of first microservices, the plurality of first microservices are microservices defined by the tenant, and the third microservice is a microservice provided by the cloud management platform for the tenant.

In this embodiment, when the tenant needs to deploy a specific application, the tenant may obtain a microservice relationship template of the application (which may also be referred to as a directed acyclic graph of a microservice). The microservice relationship template of the application includes all microservices forming the application (which may also be referred to as all components of the application, and it is assumed that all the microservices of the application include the microservices defined by the tenant and the microservice provided by cloud management platform for the tenant) and invoking relationships between the microservices. The invoking relationships between the microservices may be presented by using a plurality of unidirectional paths, each of the unidirectional paths represents one service of the application, and each of the unidirectional paths includes at least two microservices.

In the plurality of unidirectional paths included in the microservice relationship template of the application, the tenant may select a specific unidirectional path from the plurality of unidirectional paths as a key path (key path) based on a service requirement of the tenant. The key path may include the plurality of first microservices (which may also be referred to as a plurality of specific microservices, for example, a service logic component in the key path), at least one second microservice (which may also be referred to as a common microservice, for example, an entry component in the key path), and at least one third microservice (which may also be referred to as a cloud microservice, for example, an intermediate component in the key path).

After determining the key path, the tenant may log in to the cloud management platform by using a client used by the tenant, and the cloud management platform may provide the microservice configuration interface for the client used by the tenant. In this way, the tenant may send the microservice configuration information to the microservice configuration interface by using the client, to cause the cloud management platform to receive, through the microservice configuration interface, the microservice configuration information sent by the client of the tenant. The microservice configuration information indicates a region group set by the tenant and the SLA constraint that is for the region group and that is set by the tenant, the region group set by the tenant includes the plurality of first microservices and the third microservice in the key path, and the SLA constraint includes the first SLA parameter that needs to be met by the plurality of first microservices. It should be noted that, the region group set by the tenant indicates that the tenant needs to deploy the plurality of first microservices and the third microservice at a same site, and the SLA constraint set by the tenant indicates a resource requirement of the tenant on the site at which the plurality of first microservices are located.

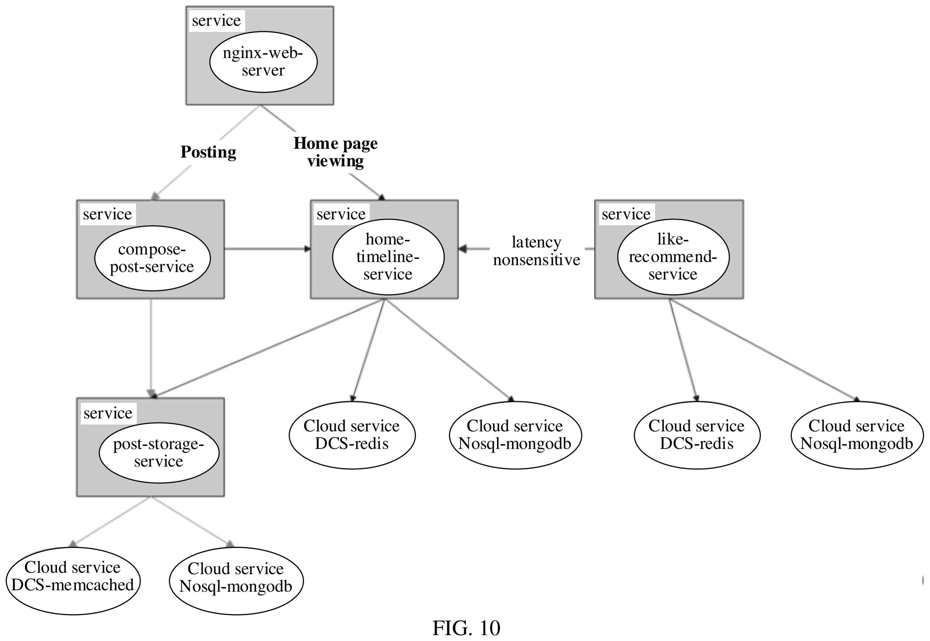

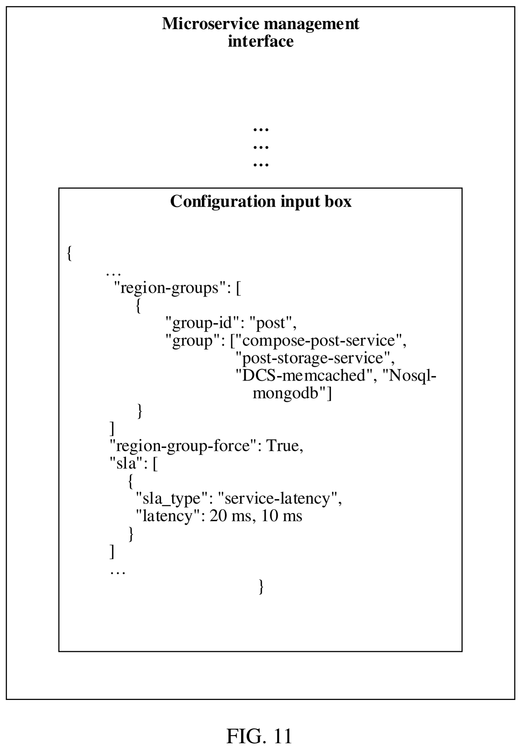

For example, as shown in FIG. 10 and FIG. 11 (where FIG. 10 is another diagram of a microservice relationship template according to an embodiment of this application, and FIG. 11 is another diagram of microservice configuration information according to an embodiment of this application), it is assumed that the tenant has a web application. In this case, a microservice relationship template of the application describes all microservices of the application and invoking relationships between the microservices. The invoking relationships are presented as a plurality of unidirectional paths, including a unidirectional path representing a posting service, a unidirectional path representing a home page viewing service, and the like. The tenant may consider the unidirectional path representing the posting service as a key path based on a service understanding. It can be learned from FIG. 10 that, the key path includes five microservices: "nginx-web-server", "compose-post-service", "post-storage-service", "DCS-memcached ", and "Nosql-mongodb". "nginx-web-server" is an entry component, namely, a common microservice. "compose-post-service" and "post-storage-service" are service logic components, namely, specific microservices. "DCS-memcached" and "Nosql-mongodb" are intermediate components, namely, cloud microservices (microservices that can be provided by the cloud management platform).

In this case, the tenant may log in to the cloud management platform by using a browser of the tenant, and the cloud management platform may display a microservice management interface on the browser of the tenant. The microservice management interface includes a configuration input box for the microservices, and the tenant may input microservice configuration information in the configuration input box. It can be learned from FIG. 11 that, the microservice configuration information includes the following content.
(1) The tenant sets a region group, and an ID of the region group is "post". The region group includes the two specific microservices: "compose-post-service" and "post-storage-service" and the two cloud microservices: "DCS-memcached" and "Nosql-mongodb", and an attribute of the region group (region-group-force) is set to strong binding (true), indicating that the four microservices need to be set at a same site.
(2) The tenant further sets an SLA constraint for the region group. The SLA constraint includes communication latency of the two specific microservices (service-latency): 20 ms and 10 ms. It is clear that the SLA constraint may further include SLA parameters such as throughputs and data processing time of the two specific microservices. This is not displayed one by one herein.

In this way, the cloud management platform may receive, by using the configuration input box, the microservice configuration information input by the tenant.

It should be understood that, in this embodiment, because the third microservice is the microservice provided by the cloud management platform for the tenant, an SLA parameter that needs to be met by the third microservice has been set in advance, and does not need to be additionally set by the tenant, so that operations of the tenant can be reduced. Generally, one piece provided by the cloud management platform may be usually displayed.

902: Determine, from a plurality of sites based on the microservice configuration information, a site that can provide the third microservice, select, from the site that can provide the third microservice, a site that meets the first SLA parameter as a first site, create a plurality of first virtual instances at the first site, and deploy the plurality of first microservices in the plurality of first virtual instances.

903: Create a third virtual instance at the first site, and deploy the third microservice in the third virtual instance.

After obtaining the microservice configuration information, the cloud management platform may parse the microservice configuration information to obtain the region group and the SLA constraint for the region group. The cloud management platform may determine, based on the plurality of first microservices and the third microservice that are included in the region group, that the plurality of first microservices and the third microservice need to be deployed at the same site, and the cloud management platform may use, as a site selection criterion, the first SLA parameter that needs to be met by the plurality of first microservices and that are included in the SLA constraint. Because the third microservice is the microservice provided by the cloud management platform for the tenant, the cloud management platform may select, from the plurality of sites, the site that can provide the third microservice (where in the plurality of sites, that some sites can provide the third microservice and some sites cannot provide the third microservice has been set by the cloud management platform in advance), select, from the site that can provide the third microservice, the site that meets the first SLA parameter as the first site, create the plurality of first virtual instances on a physical server at the first site, and deploy the plurality of first microservices in the plurality of first virtual instances.

Still as shown in the foregoing example, after obtaining the microservice configuration information, because sites that can provide the two cloud microservices: "DCS-memcached" and "Nosql-mongodb" have been determined in the plurality of sites, the cloud management platform may select, from the sites, a site 1 that can meet SLA parameters such as 20 ms and 10 ms, and create a container 1, a container 2, a container 3, and a container 4 at the site 1. The container 1 is for deploying "compose-post-service", the container 2 is for deploying "post-storage-service", the container 3 is for deploying "DCS-memcached", and the container 4 is for deploying "Nosql-mongodb". In this way, the cloud management platform deploys the four microservices at a same site, namely, the site 1.

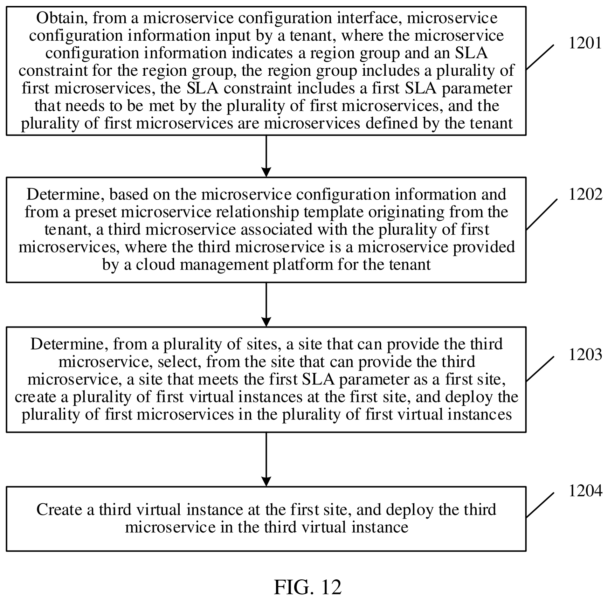

The foregoing describes in detail the fourth embodiment of the microservice management method based on the cloud management platform provided in embodiments of this application. The following describes the fourth embodiment of the method. FIG. 12 is another schematic flowchart of a microservice management method based on a cloud management platform according to an embodiment of this application. As shown in FIG. 12, a fifth embodiment of the method includes the following steps.

1201: Obtain, from a microservice configuration interface, microservice configuration information input by a tenant, where the microservice configuration information indicates a region group and an SLA constraint for the region group, the region group includes a plurality of first microservices, the SLA constraint includes a first SLA parameter that needs to be met by the plurality of first microservices, and the plurality of first microservices are microservices defined by the tenant.

For descriptions of step 1201, refer to a related description part of step 901 in the embodiment shown in FIG. 9. Details are not described herein again. It should be noted that, differences between step 1201 and step 901 are as follows. The region group indicated by the microservice configuration information includes only the plurality of first microservices, and does not include a third microservice. In addition, before sending the microservice configuration information to the cloud management platform, the tenant has preset a microservice relationship template of an application in the cloud management platform.

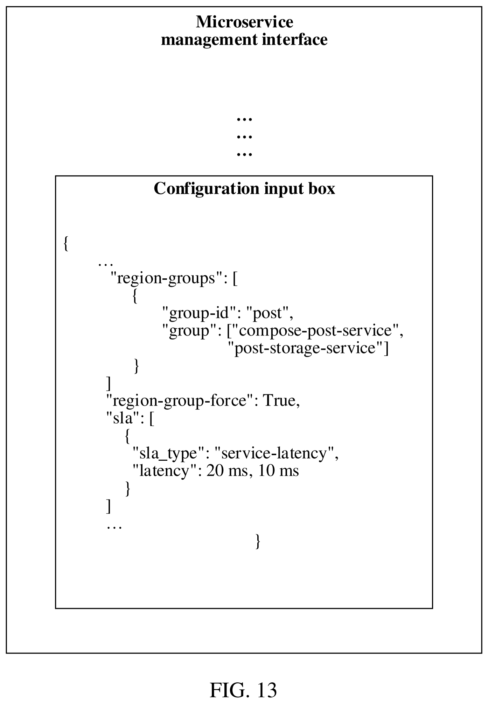

For example, as shown in FIG. 13 (where FIG. 13 is another diagram of microservice configuration information according to an embodiment of this application), the tenant may log in to the cloud management platform by using a browser of the tenant based on FIG. 10, and the cloud management platform may display a microservice management interface on the browser of the tenant. The microservice management interface includes a configuration input box for a microservice, and the tenant may input microservice configuration information in the configuration input box. It can be learned from FIG. 13 that, the microservice configuration information includes the following content.

(1) The tenant sets a region group, and an ID of the region group is "post". The region group includes two specific microservices: "compose-post-service" and "post-storage-service", and an attribute of the region group (region-group-force) is set to strong binding (true), indicating that the two microservices need to be set at a same site.

(2) The tenant further sets an SLA constraint for the region group. The SLA constraint includes communication latency of the two specific microservices (service-latency): 20 ms and 10 ms. It is clear that the SLA constraint may further include SLA parameters such as throughputs and data processing time of the two specific microservices. This is not displayed one by one herein.

In this way, the cloud management platform may receive, by using the configuration input box, the microservice configuration information input by the tenant.

1202: Determine, based on the microservice configuration information and from the preset microservice relationship template originating from the tenant, a third microservice associated with the plurality of first microservices, where the third microservice is a microservice provided by the cloud management platform for the tenant.

After receiving the microservice configuration information, the cloud management platform may parse the microservice configuration information to obtain the region group and the SLA constraint for the region group. Although the region group set by the tenant does not include the third microservice, the cloud management platform may obtain the preset microservice relationship template, and determine, from the microservice relationship template, the third microservice associated with the plurality of first microservices in the region group (because the plurality of first microservices and the third microservice form a key path). In this way, the cloud management platform may also determine that the plurality of first microservices and the third microservice need to be set at a same site.

Still as shown in the foregoing example, after receiving the microservice configuration information, the cloud management platform may determine that the region group set by the tenant includes the two specific microservices: "compose-post-service" and "post-storage-service". Then, the cloud management platform may determine, from the microservice relationship template shown in FIG. 10, two cloud microservices "DCS-memcached" and "Nosql-mongodb" that are associated with "compose-post-service" and "post-storage-service". In this way, the cloud management platform determines that the four microservices need to be deployed at the same site.

1203: Determine, from a plurality of sites, a site that can provide the third microservice, select, from the site that can provide the third microservice, a site that meets the first SLA parameter as a first site, create a plurality of first virtual instances at the first site, and deploy the plurality of first microservices in the plurality of first virtual instances.

1204: Create a third virtual instance at the first site, and deploy the third microservice in the third virtual instance.

For descriptions of step 1203 and step 1204, refer to related description parts of step 902 and step 903 in the embodiment shown in FIG. 9. Details are not described herein again.

In embodiments of this application, when the tenant needs to deploy the microservice of the application, the tenant may input the microservice configuration information to the microservice configuration interface provided by the cloud management platform. The microservice configuration information indicates the region group and the SLA constraint for the region group, the region group includes the plurality of first microservices, and the SLA constraint includes the first SLA parameter that needs to be met by the plurality of first microservices. After receiving the microservice configuration information, the cloud management platform may select, from the plurality of sites based on the microservice configuration information, the first site that meets the first SLA parameter, next create the plurality of first virtual instances at the first site, and then deploy the plurality of first microservices in the plurality of first virtual instances. In the foregoing process, because the region group indicates that the tenant needs to deploy the plurality of first microservices at the same site, and the SLA constraint indicates the resource requirement of the tenant on the site at which the plurality of first microservices are located, it can be learned that the cloud management platform selects, strictly based on a tenant indication, the first site for deploying the plurality of first microservices. Therefore, the cloud management platform may correctly deploy the plurality of first microservices at the first site, to accurately meet the cross-region deployment requirement of the user for the application.

Further, in embodiments of this application, the microservice configuration information may further indicate the microservice topology, and the microservice topology includes the plurality of first microservices and the second microservice. Because a tenant indication of allowing the plurality of first microservices and the second microservice to be deployed at the same site is indicated based on the microservice topology, the cloud management platform may flexibly deploy, strictly based on the tenant indication, the second microservice at the first site or the second site based on the SLA constraint and based on that the plurality of first microservices have been deployed at the first site. In this way, the cross-region deployment requirement of the user for the application can be further accurately met.

Further, in embodiments of this application, the region group may include the plurality of first microservices and the third microservice, the first microservices are the microservices defined by the user, and the third microservice is the microservice provided by the cloud management platform for the tenant. Because the region group indicates that the tenant needs to deploy the plurality of first microservices and the third microservice at the same site, the cloud management platform may select, strictly based on the tenant indication, the first site from the site that can provide the third microservice, and correctly deploy the plurality of first microservices and the third microservice at the first site. In this way, the cross-region deployment requirement of the user for the application can be further accurately met.

Further, in embodiments of this application, the site range for selecting the first site may be specified by the tenant. In this way, not only the cross-region deployment requirement of the user for the application can be accurately met, but also a data security requirement of the user for the application can be met, thereby improving user experience.

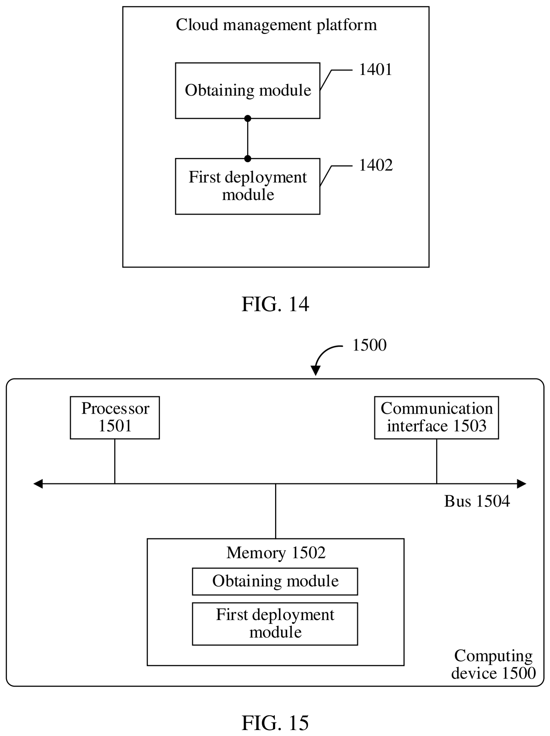

The foregoing describes in detail the microservice management method based on the cloud management platform provided in embodiments of this application. The following describes the cloud management platform provided in embodiments of this application. FIG. 14 is a diagram of a structure of a cloud management platform according to an embodiment of this application. As shown in FIG. 14, the cloud management platform is configured to manage an infrastructure that provides a cloud service, the infrastructure includes a plurality of sites at different geographical locations, and the cloud management platform includes:
an obtaining module 1401, configured to obtain, from a microservice configuration interface, microservice configuration information input by a tenant, where the microservice configuration information indicates a region group and a service level agreement SLA constraint for the region group, the region group includes a plurality of first microservices, and the SLA constraint includes a first SLA parameter that needs to be met by the plurality of first microservices, where for example, the obtaining module 1401 may be configured to implement step 201 in the embodiment shown in FIG. 2; and
a first deployment module 1402, configured to: select, from the plurality of sites based on the microservice configuration information, a first site that meets the first SLA parameter, create a plurality of first virtual instances at the first site, and deploy the plurality of first microservices in the plurality of first virtual instances, where for example, the first deployment module 1402 may be configured to implement step 202 in the embodiment shown in FIG. 2.

In this embodiment of this application, when the tenant needs to deploy a microservice of an application, the tenant may input the microservice configuration information to the microservice configuration interface provided by the cloud management platform. The microservice configuration information indicates the region group and the SLA constraint for the region group, the region group includes the plurality of first microservices, and the SLA constraint includes the first SLA parameter that needs to be met by the plurality of first microservices. After receiving the microservice configuration information, the cloud management platform may select, from the plurality of sites based on the microservice configuration information, the first site that meets the first SLA parameter, next create the plurality of first virtual instances at the first site, and then deploy the plurality of first microservices in the plurality of first virtual instances. In the foregoing process, because the region group indicates that the tenant needs to deploy the plurality of first microservices at a same site, and the SLA constraint indicates a resource requirement of the tenant on the site at which the plurality of first microservices are located, it can be learned that the cloud management platform selects, strictly based on a tenant indication, the first site for deploying the plurality of first microservices. Therefore, the cloud management platform may correctly deploy the plurality of first microservices at the first site, to accurately meet cross-region deployment requirements of users for the application.

In a possible implementation, the configuration information further indicates a microservice topology, the microservice topology includes the plurality of first microservices and a second microservice, the SLA constraint further includes a second SLA parameter that needs to be jointly met by the plurality of first microservices and the second microservice, and the cloud management platform further includes a second deployment module, configured to: if a site combination including the first site and a second site meets the second SLA parameter, create a second virtual instance at the second site, and deploy the second microservice in the second virtual instance, where the plurality of sites include the second site; or if only the first site meets the second SLA parameter, create the second virtual instance at the first site, and deploy the second microservice in the second virtual instance. For example, the obtaining module 1401 may be further configured to implement step 501 in the embodiment shown in FIG. 5, the first deployment module 1402 may be further configured to implement step 502 in the embodiment shown in FIG. 5, and the second deployment module may be configured to implement step 503 to step 505 in the embodiment shown in FIG. 5.

In a possible implementation, the configuration information further indicates a site range specified by the tenant, the site range includes at least one site in the plurality of sites, and the first deployment module 1402 is configured to select, from the at least one site based on the microservice configuration information, the first site that meets the first SLA parameter. For example, the obtaining module 1401 may be further configured to implement step 701 in the embodiment shown in FIG. 7, and the first deployment module may be further configured to implement step 702 in the embodiment shown in FIG. 7.

In a possible implementation, the region group further includes a third microservice, the plurality of first microservices are microservices defined by the tenant, the third microservice is a microservice provided by the cloud management platform for the tenant, and the first deployment module 1402 is configured to: determine, from the plurality of sites based on the microservice configuration information, a site that can provide the third microservice, and select, from the site that can provide the third microservice, a site that meets the first SLA parameter as the first site. For example, the obtaining module 1401 may be further configured to implement step 901 in the embodiment shown in FIG. 9, and the first deployment module may be further configured to implement step 902 in the embodiment shown in FIG. 9.

In a possible implementation, the plurality of first microservices are microservices defined by the tenant, and the first deployment module is configured to: determine, based on the microservice configuration information and from a preset microservice relationship template originating from the tenant, a third microservice associated with the plurality of first microservices, where the third microservice is a microservice provided by the cloud management platform for the tenant; and determine, from the plurality of sites, a site that can provide the third microservice, and select, from the site that can provide the third microservice, a site that meets the first SLA parameter as the first site. For example, the obtaining module 1401 may be further configured to implement step 1201 in the embodiment shown in FIG. 12, and the first deployment module may be further configured to implement step 1202 in the embodiment shown in FIG. 12.

In a possible implementation, the cloud management platform further includes a third deployment module, configured to: create a third virtual instance at the first site, and deploy the third microservice in the third virtual instance. For example, the third deployment module may be further configured to implement step 903 in the embodiment shown in FIG. 9 or step 1203 in the embodiment shown in FIG. 12.

In a possible implementation, the first virtual instance includes at least one of the following: virtual machine or container.

In a possible implementation, the plurality of sites are a plurality of availability zones, a plurality of regions, or at least one edge site and at least one central site.

In a possible implementation, the first SLA parameter includes at least one of the following: communication latency, throughput, and processing time.

It should be noted that, content such as information exchange between modules/units of the foregoing apparatus and an implementation process of the modules/units of the foregoing apparatus is based on a same concept as the method embodiments of this application, and produces same technical effects as those of the method embodiments of this application. For specific content, refer to the foregoing descriptions in the method embodiments in embodiments of this application. Details are not described herein again.

FIG. 15 is a diagram of a structure of a computing device according to an embodiment of this application. As shown in FIG. 15, the computing device 1500 (which may be configured to present the foregoing cloud management platform) includes a processor 1501, a memory 1502, a communication interface 1503, and a bus 1504. The processor 1501, the memory 1502, and the communication interface 1503 are coupled through a bus (not marked in the figure). The memory 1502 stores instructions. When execution instructions in the memory 1502 are executed, the computing device 1500 performs the method performed by the cloud management platform in the foregoing method embodiments.

The computing device 1500 may be one or more integrated circuits configured to implement the foregoing method, such as one or more application-specific integrated circuits (application-specific integrated circuit, ASIC), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by a processing element, the processing element may be a general-purpose processor, for example, a central processing unit (central processing unit, CPU) or another processor that may invoke a program. For still another example, these units may be integrated and implemented in a form of a system-on-a-chip (system-on-a-chip, SoC).

The processor 1501 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 1502 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, such as a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1502 stores executable program code, and the processor 1501 executes the executable program code to separately implement functions of the foregoing modules such as the obtaining module and the first deployment module, to implement the foregoing microservice management method based on the cloud management platform. In other words, the memory 1502 stores instructions for performing the foregoing microservice management method based on the cloud management platform.

The communication interface 1503 implements communication between the computing device 1500 and another device or a communication network by using a transceiver module, for example, but not limited to a network interface card or a transceiver.

In addition to a data bus, the bus 1504 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may be classified into an address bus, a data bus, a control bus, and the like.

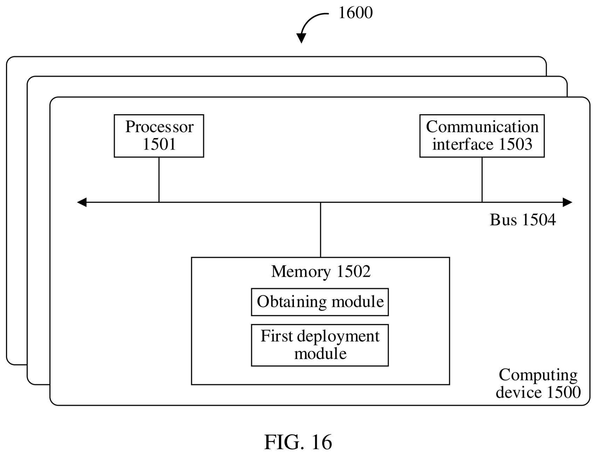

FIG. 16 is a diagram of a structure of a computing device cluster according to an embodiment of this application. As shown in FIG. 16, the computing device cluster 1600 includes at least one computing device 1500.

As shown in FIG. 16, the computing device cluster 1600 includes at least one computing device 1500. Memories 1502 in one or more computing devices 1500 in the computing device cluster 1600 may store same instructions for performing the foregoing microservice management method based on the cloud management platform.

In some possible implementations, the memories 1502 in the one or more computing devices 1500 in the computing device cluster 1600 may also respectively store some instructions for performing the foregoing microservice management method based on the cloud management platform. In other words, a combination of the one or more computing devices 1500 may jointly perform the foregoing microservice management method based on the cloud management platform.

It should be noted that, the memories 1502 in different computing devices 1500 in the computing device cluster 1600 may store different instructions, respectively for performing some functions of the foregoing cloud management platform. In other words, the instructions stored in the memories 1502 in the different computing devices 1500 may implement functions of one or more of modules such as an obtaining module and a first deployment module.

In some possible implementations, the one or more computing devices 1500 in the computing device cluster 1600 may be connected via a network. The network may be a wide area network, a local area network, or the like.

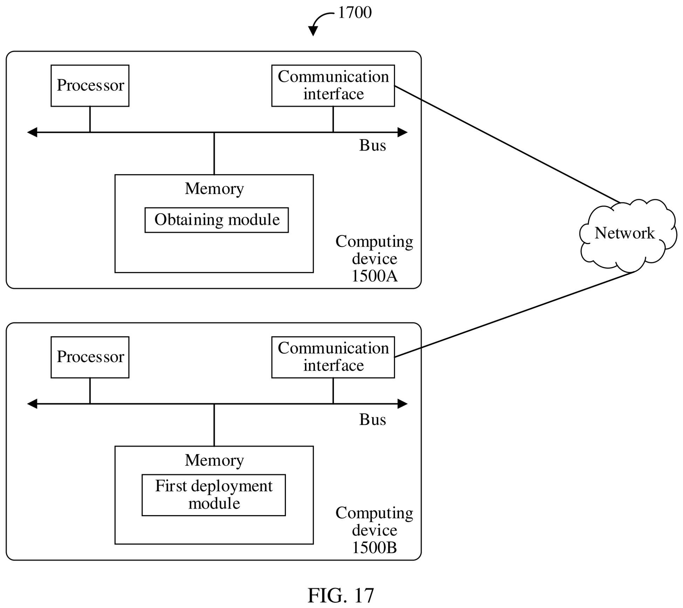

FIG. 17 is a diagram in which computer devices in a computer cluster are connected via a network according to an embodiment of this application. As shown in FIG. 17, two computing devices 1500A and 1500B are connected via a network. Specifically, the network is connected through communication interfaces in the computing devices.

In a possible implementation, a memory in the computing device 1500A stores instructions for performing functions of a module, for example, an obtaining module. In addition, a memory in the computing device 1500B stores instructions for executing functions of a module, for example, a first deployment module.

It should be understood that, functions of the computing device 1500A shown in FIG. 17 may alternatively be completed by a plurality of computing devices. Similarly, functions of the computing device 1500B may alternatively be completed by a plurality of computing devices.

An embodiment of this application further relates to a computer storage medium. The computer-readable storage medium stores a program for signal processing. When the program runs on a computer, the computer is caused to perform steps performed by the cloud management platform in the embodiments shown in FIG. 2, FIG. 5, FIG. 7, FIG. 9, and FIG. 12.

An embodiment of this application further relates to a computer program product. The computer program product stores instructions. When the instructions are executed by a computer, the computer is caused to perform steps performed by the cloud management platform in the embodiments shown in FIG. 2, FIG. 5, FIG. 7, FIG. 9, and FIG. 12.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In several embodiments provided in this application, it should be understood that, the disclosed system, apparatuses, and method may be implemented in other manners. For example, the apparatus embodiments described above are merely examples. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or the units may be implemented in electronic, mechanical, or other forms.

Units described as separate parts may or may not be physically separate, and parts displayed as units may or may not be physical units, to be specific, may be located in one place, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of steps of the method described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A microservice management method based on a cloud management platform, wherein the cloud management platform is configured to manage an infrastructure that provides a cloud service, the infrastructure comprises a plurality of sites at different geographical locations, and the method comprises:
Obtaining, from a microservice configuration interface, microservice configuration information input by a tenant, wherein the microservice configuration information indicates a region group and a service level agreement SLA constraint for the region group, the region group comprises a plurality of first microservices, and the SLA constraint comprises a first SLA parameter that needs to be met by the plurality of first microservices; and
selecting, from the plurality of sites based on the microservice configuration information, a first site that meets the first SLA parameter, creating a plurality of first virtual instances at the first site, and deploying the plurality of first microservices in the plurality of first virtual instances.

2. The method according to claim 1, wherein the configuration information further indicates a microservice topology, the microservice topology comprises the plurality of first microservices and a second microservice, the SLA constraint further comprises a second SLA parameter that needs to be jointly met by the plurality of first microservices and the second microservice, and the method further comprises:
if a site combination consisting of the first site and the second site meets the second SLA parameter, creating a second virtual instance at the second site, and deploying the second microservice in the second virtual instance, wherein the plurality of sites comprise the second site; or
if only the first site meets the second SLA parameter, creating the second virtual instance at the first site, and deploying the second microservice in the second virtual instance.

3. The method according to claim 1 or 2, wherein the configuration information further indicates a site range specified by the tenant, the site range comprises at least one site in the plurality of sites, and selecting, from the plurality of sites based on the microservice configuration information, the first site that meets the first SLA parameter comprises:
selecting, from the at least one site based on the microservice configuration information, the first site that meets the first SLA parameter.

4. The method according to any one of claims 1 to 3, wherein the region group further comprises a third microservice, the plurality of first microservices are microservices defined by the tenant, the third microservice is a microservice provided by the cloud management platform for the tenant, and selecting, from the plurality of sites based on the microservice configuration information, the first site that meets the first SLA parameter comprises:
determining, from the plurality of sites based on the microservice configuration information, a site that can provide the third microservice, and selecting, from the site that can provide the third microservice, a site that meets the first SLA parameter as the first site.

5. The method according to any one of claims 1 to 3, wherein the plurality of first microservices are microservices defined by the tenant, and selecting, from the plurality of sites based on the microservice configuration information, the first site that meets the first SLA parameter comprises:
determining, based on the microservice configuration information and from a preset microservice relationship template originating from the tenant, a third microservice associated with the plurality of first microservices, wherein the third microservice is a microservice provided by the cloud management platform for the tenant; and
determining, from the plurality of sites, a site that can provide the third microservice, and selecting, from the site that can provide the third microservice, a site that meets the first SLA parameter as the first site.

6. The method according to claim 4 or 5, wherein the method further comprises:
creating the third virtual instance at the first site, and deploying the third microservice in the third virtual instance.

7. The method according to any one of claims 1 to 6, wherein the first virtual instance comprises at least one of the following: virtual machine or container.

8. The method according to any one of claims 1 to 7, wherein the plurality of sites are a plurality of availability zones, a plurality of regions, or at least one edge site and at least one central site.

9. The method according to any one of claims 1 to 8, wherein the first SLA parameter comprises at least one of the following: communication latency, throughput, and processing time.

10. A cloud management platform, wherein the cloud management platform is configured to manage an infrastructure that provides a cloud service, the infrastructure comprises a plurality of sites at different geographical locations, and the cloud management platform comprises:
an obtaining module, configured to obtain, from a microservice configuration interface, microservice configuration information input by a tenant, wherein the microservice configuration information indicates a region group and a service level agreement SLA constraint for the region group, the region group comprises a plurality of first microservices, and the SLA constraint comprises a first SLA parameter that needs to be met by the plurality of first microservices; and
a first deployment module, configured to: select, from the plurality of sites based on the microservice configuration information, a first site that meets the first SLA parameter, create a plurality of first virtual instances at the first site, and deploy the plurality of first microservices in the plurality of first virtual instances.

11. The cloud management platform according to claim 10, wherein the configuration information further indicates a microservice topology, the microservice topology comprises the plurality of first microservices and a second microservice, the SLA constraint further comprises a second SLA parameter that needs to be jointly met by the plurality of first microservices and the second microservice, and the cloud management platform further comprises a second deployment module, configured to:
if a site combination consisting of the first site and the second site meets the second SLA parameter, create a second virtual instance at the second site, and deploy the second microservice in the second virtual instance, wherein the plurality of sites comprise the second site; or
if only the first site meets the second SLA parameter, create the second virtual instance at the first site, and deploy the second microservice in the second virtual instance.

12. The cloud management platform according to claim 10 or 11, wherein the configuration information further indicates a site range specified by the tenant, the site range comprises at least one site in the plurality of sites, and the first deployment module is configured to select, from the at least one site based on the microservice configuration information, the first site that meets the first SLA parameter.

13. The cloud management platform according to any one of claims 10 to 12, wherein the region group further comprises a third microservice, the plurality of first microservices are microservices defined by the tenant, the third microservice is a microservice provided by the cloud management platform for the tenant, and the first deployment module is configured to: determine, from the plurality of sites based on the microservice configuration information, a site that can provide the third microservice, and select, from the site that can provide the third microservice, a site that meets the first SLA parameter as the first site.

14. The cloud management platform according to any one of claims 10 to 12, wherein the plurality of first microservices are microservices defined by the tenant, and the first deployment module is configured to:
determine, based on the microservice configuration information and from a preset microservice relationship template originating from the tenant, a third microservice associated with the plurality of first microservices, wherein the third microservice is a microservice provided by the cloud management platform for the tenant; and
determine, from the plurality of sites, a site that can provide the third microservice, and select, from the site that can provide the third microservice, a site that meets the first SLA parameter as the first site.

15. The cloud management platform according to claim 13 or 14, wherein the cloud management platform further comprises a third deployment module, configured to: create the third virtual instance at the first site, and deploy the third microservice in the third virtual instance.

16. The cloud management platform according to any one of claims 10 to 15, wherein the first virtual instance comprises at least one of the following: virtual machine or container.

17. The cloud management platform according to any one of claims 10 to 16, wherein the plurality of sites are a plurality of availability zones, a plurality of regions, or at least one edge site and at least one central site.

18. The cloud management platform according to any one of claims 10 to 17, wherein the first SLA parameter comprises at least one of the following: communication latency, throughput, and processing time.

19. A computing device cluster, wherein the computing device cluster comprises at least one computing device, each computing device comprises a processor and a memory,
the memory is configured to store instructions, and
the processor is configured to cause, according to the instructions, the computing device cluster to perform the method according to any one of claims 1 to 9.

20. A computer storage medium, wherein the computer storage medium stores one or more instructions; and when the instructions are executed by one or more computers, the one or more computers are caused to implement the method according to any one of claims 1 to 9.

21. A computer program product, wherein the computer program product stores instructions; and when the instructions are executed by a computer, the computer is caused to implement the method according to any one of claims 1 to 9.
